# EUROPEAN PATENT SPECIFICATION

(11) **EP 1 341 673 B1**
(45) Date of publication and mention of the grant of the patent: **04.08.2004**
(21) Application number: 01999482.1
(22) Date of filing: 06.12.2001
(51) Int. Cl.: B41M 5/00, C09D 179/00, C08L 79/00, C08K 3/00

(54) **GUANIDINE-BASED COATING COMPOSITIONS AND RECORDING MATERIALS CONTAINING THESE COMPOSITIONS**
BESCHICHTUNGSZUSAMMENSETZUNGEN AUF GUANIDINBASIS UND AUFZEICHNUNGSMATERIALIEN, DIE DIESE ZUSAMMENSETZUNGEN ENTHALTEN
COMPOSITIONS DE REVETEMENT A BASE DE GUANIDINE, ET MATERIAUX POUR L'ENREGISTREMENT CONTENANT CES COMPOSITIONS.

(30) Priority: 07.12.2000 GB 0029821; 15.01.2001 GB 0101008
(43) Date of publication of application: 10.09.2003
(73) Proprietor: Avecia Limited, Blackley, Manchester M9 8ZS (GB)
(72) Inventor: PAYNE, John, David, Manchester M9 8ZS (GB); HOLBROOK, Mark, Blackley, Manchester M9 8ZS (GB); YEATES, Stephen, George, Blackley, Manchester M9 8ZS (GB); JOHNSON, Kevin, Blackley, Manchester M9 8ZS (GB); KENWORTHY, Mark, Blackley, Manchester M9 8ZS (GB); ANNABLE, Tom, Blackley, Manchester M9 8ZS (GB)
(74) Representative: Mayall, John
(86) International application number: PCT/GB2001/005381
(87) International publication number: WO 2002/045970

(56) References cited:
- WO-A-00/58107
- WO-A-99/54144

## Description

This invention relates to a coating compositions, to recording materials and to processes for making and using recording materials.

Ink-jet printing (IJP) is a non-impact printing technique in which droplets of ink are ejected through a fine nozzle onto a recording material without bringing the nozzle into contact with the recording material. The images prepared by IJP desirably meet many demanding requirements. For example, they should be sharp and non-feathered and should also exhibit high water-fastness, light-fastness, humidity-fastness and optical density without suffering from significant hue shift. Both the ink and recording material used in forming the image play a key role in ensuring these requirements are met.

Recording material used in ink-jet printing can be plain paper, coated paper, plastic film, cloth, and any other coated or uncoated material that can absorb ink and form a good image. However, in order to form a high resolution image, the recording material usually comprises a substrate carrying a dry coating layer obtained from a specially formulated coating composition. These coating layers can be divided into two major categories: fully dense coatings (also known as swellable coatings) and porous coatings.

The fully dense coatings are mainly comprised of film-forming polymers, with at least one of the polymers being hydrophilic. This hydrophilic polymer is either water soluble or water swellable. Sometimes a small amount of pigment is incorporated into these coatings, but the weight ratio of pigment to binder in the coating composition is usually 1:1 or less. Fully dense coatings give a glossy surface and are usually transparent. They absorb ink and form an image through rapid swelling of the coating itself. However, they often display poor wet-fastness and rub-fastness.

International Patent Application WO0058107 describes the use of a polymonoguanidine as a fixing agent in fully dense coatings for ink-jet printing.

Ink droplets applied by ink-jet printing are rapidly absorbed into porous coatings through capillary action with the result that the image is touch-dry soon after printing. Thus, porous coatings have the advantage over fully dense coatings in that they allow faster "drying" of the ink. We have surprisingly found that certain coating compositions are useful for preparing recording materials having beneficial properties.

Thus, according to the present invention there is provided a coating composition comprising pigment, medium and binder comprising a poly(C₃₋₁₈-hydrocarbyl mono guanidine) and characterised in that the weight ratio of pigment to binder in the composition is at least 2:1.

The poly(C₃₋₁₈-hydrocarbyl mono guanidine) ("PMG") preferably comprises a plurality of groups of Formula (1) and/or groups of Formula (2) or salts thereof: 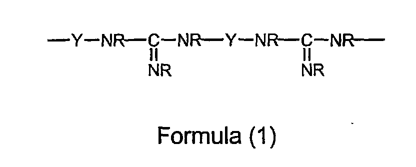 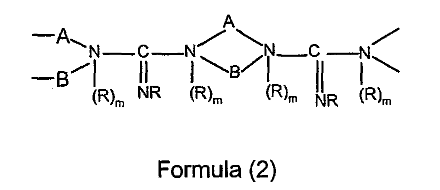 wherein:
each m independently is 0 or 1;
each Y independently is a C₃₋₁₈-hydrocarbyl group;
A and B are hydrocarbyl groups which together comprise a total of 3 to 18 carbon atoms;
each R independently is hydrogen, optionally substituted alkyl or optionally substituted alkoxy.

Preferably each m is 0.

The hydrocarbyl groups in the PMG and represented by Y, A and B are optionally interrupted by one or more hetero atoms or groups and optionally carry one or more substituents other than hydrogen. Preferred interrupting atoms and groups are -O-, -S-, -NH-, -C(=O)- and phenylene. Preferred optional substituents are hydroxy; C₁₋₄-alkoxy; halo, especially chloro or bromo; nitro; amino; substituted amino; and acid groups, especially carboxy, sulpho phosphato, guanidino and substituted guanidino.

When the hydrocarbyl group represented by Y, A or B is an alkylene group it is preferably straight chain or branched chain.

Preferably the hydrocarbyl groups in the PMG and represented by Y are C₃₋₁₈- alkylene (more preferably C₄₋₁₆-alkylene, especially C₆₋₁₂-alkylene, more especially C₆-alkylene); C₃₋₁₂-arylene more preferably C₆₋₁₀-arylene, especially phenylene or naphthylene; C₇₋₁₂-arakylene (more preferably C₇₋₁₁-arylene, especially benzylene or xylyene); or a combination thereof, optionally interrupted by one or more -O-, -S-, -NH- or -C(=O)- groups.

Preferably the hydrocarbyl groups represented by A and B are each independently C₂₋₆-alkylene, optionally interrupted by one or more -O-, -S-, -NH- or -C(=O)- groups, with the proviso that A and B comprise a total of 2 to 12 carbon atoms, preferably 3 to 6 carbon atoms, more preferably 3 or 4 carbon atoms. In an especially preferred embodiment one of A or B is -CH₂- or -(CH₂)₂- and the other is -(CH₂)₂-, more especially both A and B are -(CH₂)₂-

Examples of preferred -hydrocarbyl groups represented by Y include -CH₂C₆H₄CH₂-, -CH₂OC₆H₄OCH₂-, -CH₂OC₆H₁₀OCH₂-, -(CH₂)₃O(CH₂)₃- and -(CH₂)₂S(CH₂)₂-.

Examples of particularly preferred -hydrocarbyl groups represented by Y include -(CH₂)₆-, -(CH₂)₈-, -(CH₂)₉-, -(CH₂)₁₂-, -CH₂CH(-CH₃)(CH₂)₄CH₃, 1,4-, 2,3- and 1,3-butylene, 2,5-hexylene, 2,7-heptylene, 3-methyl-1,6-hexylene.

It is preferred that all groups represented by Y are the same and are C₄₋₁₆-alkylene, more preferably C₄₋₁₂-alkylene, especially C₄₋₈-alkylene more especially 1, 6-hexylene.

Preferably each R independently is H, C₁₋₄-alkyl, C₁₋₄-alkoxy or C₁₋₄-alkoxy-OH, more preferably H or methyl, especially H.

Preferably the PMG consists essentially of groups of Formula (1).

Preferably all groups represented by R are the same.

More preferably all groups represented by R are H.

The nature of the terminating groups on the PMG is not believed to be critical. Preferred terminating groups on the PMG are amino and guanidinino.

In view of the foregoing preferences the PMG preferably comprises one or more groups of Formula (3) or salts thereof: 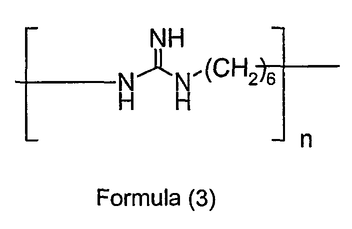 wherein:
n is 2 to 100, preferably 2 to 50, especially 3 to 25.

The PMGs may be prepared by the reaction of guanidine hydrochloride with a diamine, for example of the formula H₂N-Y-NH₂, HN(-A-)(-B-)NH or with a mixture of such diamines, wherein Y, A and B are as defined above.

The PMG may be either a single discrete species or a mixture of polymers of varying chain length containing one or more repeat units of Formula (1) and or (2). When the PMG is a mixture of polymers of varying chain length then preferably it comprises a single type of repeat unit of Formula (1) or (2).

It is to be understood that the PMG may also contain repeating units other than repeat units of Formula (1) and (2). In PMG's containing biguanide groups in addition to the monoguanidine groups it is preferred that the number of biguanide groups is less than 70%, more preferably less than 60%, and in one embodiment less than 10%, in each case relative to the total number of biguanide and monoguanidine groups in the PMG. However, it is preferred that the PMG substantially comprises repeat units of Formula (1) and/or (2).

The PMG is preferably in the form of a salt. Preferred salts are those with organic or inorganic acids, especially water-soluble salts, for example the gluconate, acetate, phosphate or hydrochloride salt.

It is also preferred that the PMG is preferably colourless, or substantially colourless.

The pigment preferably comprises clay, calcium carbonate, magnesium carbonate, silica (especially surface modified silica), zeolite, alumina or a combination of two or more thereof.

Preferably the pigment comprises alumina or surface modified silica or a mixture thereof.

It is also preferred that the pigment is a porous pigment because this improves the porosity and water-fastness of recording materials prepared from the composition.

Examples of preferred porous pigments include fumed and precipitated silicas.

Preferably the pigment has a BET surface area greater than 25m²/g, more preferably greater than 50m²/g.

In a preferred composition the binder comprises a PMG and one or more further binders.

The additional binder is preferably a polymeric binder, more preferably a water-soluble or water-dissipatable polymeric binder.

The preferred water-soluble polymeric binders include starches, preferably hydroxy alkyl starches, for example hydroxyethylstarch; celluloses, for example cellulose, methylcellulose, hydroxyethylcellulose, hydroxypropylcellulose, hydroxyethyl methyl cellulose, carboxymethlycellulose (and salts thereof) and cellulose acetate butyrate; gelatin; gums, for example guar, xanthan gum and gum arabic; polyvinylalcohol; polyvinylphosphate; polyvinylpyrrolidone; polyethylene glycol; hydrolysed polyvinylacetate; polyethylene imine; polyacrylamides, for example polyacrylamide and poly(N,N-dimethyl acrylamide) and polyacrylamido-2-methyl propane sulphonic acid); acrylamide-acrylic acid copolymers; polyvinylpyridine; polyvinylphosphate; vinylpyrrolidone-vinyl acetate copolymers; vinyl pyrrolidone-styrene copolymers; polyvinylamine; poly(vinyl pyrrolidonedialkylaminoalkyl alkylacrylates), for example poly vinylpyrrolidone-diethylaminomethylmethacrylate; acid-functional acrylic polymers and copolymers, for example poly(meth)acrylic acid and copolymers of (meth)acrylic acid and other (meth)acrylate monomers; amine-functional acrylic polymers and copolymers, for example polydimethylaminoethylmethacrylate; acid or amine functional urethane polymers, for example those containing dimethylolpropanoic acid and/or pendant or terminal polyethylene glycols; ionic polymers, for example poly (N,N-dimethyl-3,5-dimethylene piperidinium chloride); polyesters, preferably those which carry water-solubilising groups such as sulphonic acid groups, for example polyesters obtainable by polymerising a polyol with sodiosulphoisophthalic acid.

Preferred water-dissipatable polymeric binders are: latex polymers, for example cationic, non-ionic and anionic styrene-butadiene latexes; vinyl acetate-acrylic copolymer latexes; acrylic copolymer latexes which carry amino groups, for example containing copolymerised dimethylaminoethyl (meth)acrylate; and dispersions of polyester, polyurethane, (meth)acrylate or vinyl polymers and copolymers thereof. The polymer dispersions are preferably prepared by emulsion polymerisation or by dispersion into water of polymers prepared by suspension, bulk or solution polymerisation.

A combination of water-soluble polymeric binders and water-dissipatable polymeric binders can be beneficial in terms of improved mechanical strength, reduced tendency for sheets to stick together and good ink absorbency.

Overall particularly good results are found when the additional binder is polyvinylalcohol, methylcellulose, polyvinylpyrrolidone, or any combination thereof.

In a particularly preferred composition the binder comprises a PMG comprising a repeat unit of Formula (1) and polyvinylalcohol. Preferably the polyvinyl alcohol is obtained by hydrolysis of polyvinylacetate, more preferably the hydrolysis value is greater than 70%. It is also preferred that the molecular weight of the polyvinyl alcohol is greater than 10,000 more preferably greater than 50,000.

Preferably the weight ratio of pigment to binder in the composition is from 2:1 to 10:1.

It is preferred that the weight ratio of pigment to binder in the composition is at least 3:1 and more preferably at least 4:1, especially at least 5:1 and more especially at least 6:1.

Preferably the medium is a liquid medium since this makes it easier to apply the composition to the substrate. The binder that comprises a cationic polymer comprising a repeat unit of Formula (1) and any additional binder(s) are preferably dispersed or more preferably dissolved in the liquid medium. The liquid medium is preferably selected from water; organic solvent and a mixture of water and organic solvent. The organic solvent may comprise a mixture of one or more different organic solvents.

When the liquid medium comprises a mixture of water and organic solvent, the organic solvent is preferably water-soluble organic solvent.

It is also preferred that when the liquid medium comprises a mixture of water and organic solvent that the organic solvent is less than 20% more preferably less than 10% by weight.

Preferred water-soluble organic solvents include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; diols, preferably diols having from 2 to 12 carbon atoms, for example pentane-1,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone,; sulphoxides, preferably sulpholane. Preferably the liquid medium comprises water and 2 or more, especially from 2 to 8, water-soluble organic solvents.

Especially preferred water-soluble organic solvents are cyclic amides, especially 2-pyrrolidone, N-methyl-pyrrolidone; diols, especially 1,5-pentane diol, ethyleneglycol, thiodiglycol, diethyleneglycol and triethyleneglycol; and mono- C₁₋₄-alkyl and C₁₋₄-alkyl ethers of diols, more preferably mono- C₁₋₄-alkyl ethers of diols having 2 to 12 carbon atoms, especially 2-methoxy-2-ethoxy-2-ethoxyethanol.

When the liquid medium comprises only organic solvent it is preferred that it is free from water, (i.e. less than 1% water by weight).

When the liquid medium comprises only organic solvent it is also preferred that the solvent has a boiling point of from 30° to 200°C, more preferably of from 40° to 150°C, especially from 50 to 125°C. The organic solvent may be water-immiscible, water-soluble or a mixture of such solvents. Preferred water-soluble organic solvents are any of the hereinbefore described water-soluble organic solvents and mixtures thereof.

Preferred water-immiscible solvents include, for example: aliphatic hydrocarbons; esters, preferably ethyl acetate; chlorinated hydrocarbons, preferably CH₂Cl₂; and ethers, preferably diethyl ether; and mixtures thereof.

It is especially preferred that the liquid medium comprises water or a mixture of water and one or more water-soluble organic solvent(s).

The composition may also comprise further ingredients if desired, for example catalysts (e.g. to accelerate cross-linking of the binder), polymeric fillers (e.g. polymethylmethacrylate particles of 10 to 50 µm diameter), primers, drying-time accelerants, adhesion promoters, defoamers, biocides, surfactants, cationic or anionic salts to name but a few.

Preferably the composition also contains a cross-linker, preferably in an amount that causes from 0.1 to 5%, more preferably 0.15 to 4%, especially 0.2 to 2% cross-linking of cross-linkable components of the composition. These levels of cross-linking are preferred because they can result in enhanced mechanical strength of resultanf coated materials without adversely affecting ink-absorbing properties.

Preferred cross-linkers include boric acid, isocyanate and blocked isocyanates, aziridines, carbodiimides and salts of divalent and trivalent metals (e.g. calcium and magnesium acetate).

A preferred coating composition comprises:
(a) 0.5 to 25 parts of a binder comprising 0.5 to 15 parts of a PMG and 0 to 24.5 parts, more preferably 5 to 24.5 parts, of a further binder;
(b) 7.5 to 50 parts of pigment; and
(c) 1 to 90 parts of a liquid medium comprising water or a mixture of water and organic solvent;
wherein all parts are by weight, the total number of parts (a) + (b) + (c) = 100 and the weight ratio of pigment to total binder in the composition is at least 2:1.

A more preferred coating composition comprises:
(a) 0.5 to 25 parts of a binder comprising 0.5 to 15 parts of PMG's comprising a plurality of groups of Formula (1) and 5 to 24.5 parts of a further binder comprising or consisting essentially of polyvinylalcohol, methylcellulose, polyvinylpyrrolidone, or any combination thereof;
(b) from 7.5 to 50 parts of porous pigment;
(c) 4 to 90 parts of a liquid medium comprising from 0 to 10 parts of water-soluble organic solvent and from 40 to 80 parts water.

Of course the coating compositions may contain further components in addition to (a), (b) and (c) as described above:
wherein all parts are by weight, the total number of parts (a) + (b) + (c) = 100 and the weight ratio of pigment to total binder in the composition is at least 2:1.

Preferred substrates include paper, plastic, a textile, metal or glass, more preferably paper, a textile or a plastic film (especially a transparent film, for example an overhead projector slide). It is especially preferred that the substrate is plain paper, coated paper or a transparent plastic film.

The composition may be applied to the substrate using any convenient method, for example by dip coating, reverse roller coating, K-bar coating, spraying or by means of an ink-jet printer. After application of the composition to the substrate it is preferred that the composition is dried and/or polymerised (e.g. cross-linked). Any suitable drying method may be used, for example hot air drying

According to a second aspect of the invention there is provided a recording material obtained from applying a composition according to the first aspect of the invention to a substrate.

In the process of the second aspect of the invention the composition may be applied to part or all of the recording material. When the recording material is in sheet form the composition according to the first aspect of the invention is optionally applied to one or both sides thereof, more preferably to one side of the sheet.

The process by which the recording material has been obtained preferably further comprises the step of drying the composition during or after it has been applied to the substrate, thereby forming a dry coating (a layer obtained in this way is hereinafter abbreviated as a "Coating Layer") on the substrates.

It is also preferred that the dry coating has a total pore volume in the range 20 to 95% more preferably 30 to 75% relative to the total volume of the dry coating.

Preferably the pigment is a cationic pigment, i.e. the zeta potential of the pigment is positive at the pH of the composition. In this case it is preferred that the binder is non-ionic or cationic (or both) at the pH of the coating composition prior to coating.

The Coating Layer may be the sole layer of a single layer coating on the substrate, or a layer that forms part of a multi-layer coating on the substrate.

When the substrate bears the composition in the form of a multi-layer coating the Coating Layer may be at any position of the multi-layer coating, for example it may optionally be the inner-most layer in direct contact with the substrate, the outer-most layer, a layer between the inner-most and outer-most layers, or Coating Layers may be present at two or more of such positions. When the outer-most layer is not a Coating Layer the layers that are further away from the substrate than the Coating Layer should be permeable or porous to allow ink to come into contact with the Coating Layer. It is however preferred that a Coating Layer is present as the only layer or the outer-most layer of a multi-layer coating on a substrate (i.e. the layer furthest away from the substrate) because this ensures good contact with inks during ink-jet printing.

The preferred substrates for use in the second aspect of the invention are as defined in the first aspect of the present invention.

It is especially preferred that the substrate is plain paper, treated paper or a transparent plastic film.

The recording material preferably has a thickness of from 10 to 1000 µm, more preferably from 50 to 500µm. The substrate preferably has a thickness of from 9 to 990 µm, more preferably from 49 to 499 µm. The coating, whether single- or multi-layered, preferably has an overall thickness of from 0.1 to 100µm, more preferably from 5 to 50 µm, especially from 10 to 40 µm.

The composition is preferably applied to the substrate by the methods described above in relation to the first aspect of the invention.

The recording materials may be used as ink receptive sheets in a wide range of printing processes, especially ink-jet printing. They are able to provide excellent quality images, often of near photographic quality, having good wet-fastness, light-fastness, gloss and low sticking and cracking properties. The resultant prints usually have good optical density, even with black pigment inks that often suffer from a drop in optical density, an unsightly grey appearance and poor image quality when printed onto conventional recording materials. The humidity fastness is also good. Furthermore the sheets benefit from good storage stability and a low susceptibility to microbial decay.

Preferably the recording material is white or transparent.

According to a third aspect of the invention there is provided a process for forming a recording material that comprises applying a composition according to the first aspect of the invention to a substrate.

The composition is preferably applied as described in the second aspect of the invention.

Preferred substrates in the third aspect of the invention are as described in the second aspect of the invention.

According to a fourth aspect of the invention there is provided an ink-jet printing process that comprises applying ink to a recording material according to the second aspect of the invention by means of an ink-jet printer.

The invention is further illustrated by the following examples in which all parts and percentages are by weight unless specified otherwise.

### Examples 1 and 2 and Control Examples 1 to 5

### Stage 1 Preparation of poly(hexamethyleneguanidine).HCl ("PMG 1")

Guanidine hydrochloride (45g) and 1,6-hexamethylenediamine (54.74g) were weighed into a 250ml round-bottomed flask. The mixture was heated to 120°C with stirring under N₂. The reaction mixture was held under N₂ at 120°C for 5 hours. The temperature was then increased to 150°C and the reaction mixture was held at this temperature for a further 7 hours. The reaction mixture containing the product was allowed to cool to room temperature and then mixed with an equal volume of distilled water and heated to 80°C and held at this temperature until the product had dissolved. The solution was cooled and the pH adjusted to 1.5 with concentrated HCl and adjusted to 25% solids with distilled water. The aqueous solution of the product separated from an oily top layer using a separating funnel.

The resultant monoguanidine was of Formula (3) as hereinbefore defined with an average value for n of 5, as determined by ¹H NMR end group analysis.

### Stage 2 - Preparation of Fixing Compositions

The following fixing compositions were prepared using polyvinyl alcohol (Mowiol™ 40-88 supplied by Harlow Chemical Company Ltd.) as a 10% by weight stock solution in de-ionised water, alumina pigment dispersion in water (40% solids by weight, PG003, Cabot Chemical Co.), PHMG hydrochloride (25% by weight aqueous solution), prepared as in Stage 1 above, and PEI (Lupasol™ FG supplied by BASF).

**Table 1**

| | Pigment to Binder Ratio | PVOH (10%) | PHMG (25%) | PEI | Alumina (40%) | Water |
|---|---|---|---|---|---|---|
| Control 1 | 6:1 | 10 | 0 | 0 | 15 | 10 |
| Example 1 | 6:1 | 5 | 2 | 0 | 15 | 13 |
| Example 2 | 6:1 | 7.5 | 1 | 0 | 15 | 11.5 |
| Control 2 | 6:1 | 5 | 0 | 0.5 | 15 | 14.5 |
| Control 3 | 6:1 | 7.5 | 0 | 0.25 | 15 | 12.25 |
| Control 4 | 1:1 | 10 | 2 | 0 | 3.75 | 0 |
| Control 5 | 1:1 | 10 | 0 | 0.5 | 3.75 | 0.75 |

### Stage 3 - Preparation of Recording Materials

The formulations described in Table 1 were coated onto white card using a number 7 K-bar. The coatings were then dried in an oven at 100°C for 3 minutes. All coatings were examined and found to be smooth and even and devoid of cracks.

### Stage 4 - Printing of Recording Materials

The recording materials from Stage 3 were then ink-jet printed using a Canon BJC8200 colour ink-jet printer using the standard ink-set supplied by Canon for this printer i.e. cyan, magenta, yellow and black ink.

The prints were made in the form of a grid consisting of 2mm parallel lines separated by unprinted areas of 7mm.

Print quality was assessed in terms of evenness of colour and absence of mottle as:
1=excellent
2=average
3=poor

Dry-time was assessed as:
1 = prints touch dry immediately after printing
2 = touch dry in > 30s
3 touch dry in > 2 minutes.

The results of the print quality and dry-time tests are shown in Table 2 below.

### Stage 5 - Water-fastness Testing of Recording Materials

Water-fastness was assessed by performing water run-downs on the printed recording materials from Stage 4. The prints were allowed to dry at room temperature before they were inclined at 45° to the horizontal and 1ml of water was run down over the print at a right angle to the direction of the printed lines. The unprinted areas were then examined to determine the extent of any colour running from the printed lines to the unprinted areas. The substrates were given a scoring according to the following criteria:
1 = No run-down evident (complete water resistance in this test)
2 = Some colour run-down evident
3 = Very bad colour run-down evident (no water resistance)

The results of the water-fastness assessments performed in Stage 5 are shown in Table 2.

**Table 2**

| | Water Resistance (Black) | Water Resistance (Magenta) | Water Resistance (Yellow) | Water Resistance (Cyan) | Print Quality | Drytime |
|---|---|---|---|---|---|---|
| Control 1 | 2 | 2 | 2 | 1 | 1 | 1 |
| Example 1 | 1 | 1 | 1 | 1 | 1 | 1 |
| Example 2 | 2 | 1 | 1 | 1 | 1 | 1 |
| Control 2 | 3 | 3 | 2 | 1 | 1 | 1 |
| Control 3 | 2 | 2 | 2 | 1 | 1 | 1 |
| Control 4 | 3 | 3 | 2 | 2 | 2 | 2 |
| Control 5 | 3 | 3 | 2 | 2 | 1 | 1 |

From Table 2 it is apparent that Examples 1 and 2 show performance superior to all of the Control Examples.

### Examples 3 to 27

### Further PMG's

### Preparation of poly(nonamethyleneguanidine).HCl ("PMG 2")

The procedure was carried out as for PMG 1 above except that an equimolar mixture of 1,9-nonamethylenediamine and guanidine hydrochloride was used in place of 1,6-hexamethylenediaime.

### Preparation of poly(dodecamethyleneguanidine).HCl ("PMG 3")

The procedure was carried out as for PMG 1 above except that an equimolar mixture of 1,12-dodecamethylenediamine and guanidine hydrochloride was used in place of 1,6-hexamethylenediamine.

### Preparation of poly(hexamethyleneguanidine) acetate ("PMG 15")

A solution of poly(hexamethyleneguanidine).HCl (20% solution in water, 100g) (PMG 1) was mixed with sodium hydroxide (30%, 100g). The resultant precipitate was isolated and washed repeatedly with 5% sodium hydroxide and then with distilled water to yield the free base. An aqueous solution of the acetate salt was formed by adding water to the free base followed by a 15% aqueous solutions of acetic acid until the pH reached a value of 7.

### Preparation of poly(hexamethyleneguanidine).phosphate ("PMG 8")

The procedure was carried out as for PMG 15 above except that 15% phosphoric acid was used in place of acetic acid.

### Preparation of poly(hexamethyleneguanidine).propionate ("PMG 22")

The procedure was carried out as for PMG 15 above except that 15% propionic acid was used in place of acetic acid.

PMG's were prepared by the general method of Example 1 Stage1 except that in place of 1,6-hexamethylenediamine there was used the linking amine shown in Table A below in an equimolar amount to guanidine hydrochloride to give the desired PMG. Hydrochloride salts were converted to the corresponding acetate, phosphate and propionate salts using the general methods described above for PMG 2, 3, 8, 15 and 22.

**Table A**

| **Compound** | **Linking Amine** | **Salt Form** |
|---|---|---|
| PMG 4 | C₆ : C₁₂ (1 : 1) | HCl |
| PMG 5 | -N(CH₂CH₂)₂N- : C₆ (1:1) | HCl |
| PMG 6 | -N(CH₂CH₂)₂N- : C₁₂ (1:1) | HCl |
| PMG 7 | Jeffamine^{RTM} T403 : C₆ (1:1) | HCl |
| PMG 9 | C₉ | phosphate |
| PMG 10 | C₁₂ | phosphate |
| PMG 11 | C₆ : C₁₂ (1 : 1) | phosphate |
| PMG 12 | -N(CH₂CH₂)₂N- : C₆ (1:1) | phosphate |
| PMG 13 | -N(CH₂CH₂)₂N- : C₁₂ (1:1) | phosphate |
| PMG 14 | Jeffamine^{RTM} T403 : C₆ (1:1) | phosphate |
| PMG 16 | C₉ | acetate |
| PMG 17 | C₁₂ | acetate |
| PMG 18 | C₆ : C₁₂ (1 : 1) | acetate |
| PMG 19 | -N(CH₂CH₂)₂N- : C₆ (1:1) | acetate |
| PMG 20 | -N(CH₂CH₂)₂N- : C₁₂ (1:1) | acetate |
| PMG 21 | Jeffamine^{RTM} T403 : C₆ (1:1) | acetate |
| PMG 23 | C₉ | propionate |
| PMG 24 | C₁₂ | propionate |
| PMG 25 | C₆ : C₁₂ (1 : 1) | propionate |
| PMG 26 | -N(CH₂CH₂)₂N- : C₆ (1:1.) | propionate |
| PMG 27 | -N(CH₂CH₂)₂N- : C₁₂ (1:1) | propionate |
| PMG 28 | Jeffamine^{RTM} T403 : C₆ (1:1) | propionate |

PMG 1, 2, 3, 15, 8 and 22 were prepared as described above.
Jeffamine^{RTM} T403 is a triamine sold by Huntsman Corporation (CAS 39423-51-3).
C₆ is 1,6-hexamethylenediamine
C₉ is 1,9-nonamethylenediamine
C₁₂ is of 1,12-dodecamethylenediamine
1:1 refers to a 1:1 mixture by weight.

### Further Media Compositions

Further media compositions according to the invention may be prepared by preparing the known media described in Table B, column 2 and including the PMG's shown in Table A. In column 3 of Table B the PMG and amount used (shown in brackets; parts by weight relative to 100 parts by weight of the composition) is shown.

**Table B -**

| Further Media Compositions | | |
|---|---|---|
| Example | Known Media | PMG (parts) |
| | US5576088 | |
| 3 | Example 2 | PMG 6 (8) |
| 4 | Example 3 | PMG 7 (11) |
| 5 | Example 4 | PMG 8 (5) |
| 6 | Example 5 | PMG 9 (15) |
| 7 | Example 6 | PMG 10 (3) |
| 8 | Example 7 | PMG 11 (20) |
| 9 | Example 8 | PMG 12 (7) |
| 10 | Example 9 | PMG 13 (4) |
| | US5985076 | |
| 11 | Example 1 | PMG 14 (5) |
| 12 | Example 4 | PMG 15 (10) |
| | US5104730 | |
| 13 | Example 1 | PMG 16 (5) |
| 14 | Example 2 | PMG 17 (10) |
| 15 | Example 3 | PMG 18 (3) |
| 16 | Example 4 | PMG 19 (15) |
| 17 | Example 5 | PMG 20 (7) |
| 18 | Example 6 | PMG 21 (20) |
| 19 | Example 7 | PMG 22 (6) |
| 20 | Example 8 | PMG 23 (12) |
| | EP0696516 | |
| 21 | Example 1 | PMG 1 (15) |
| 22 | Example 2 | PMG 6 (3) |
| 23 | Example 3 | PMG 7 (5) |
| | EP0705710 | |
| 24 | Example 1 | PMG 1 (10) |
| 25 | Example 2 | PMG 15 (5) |
| 26 | Example 3 | PMG 22 (7) |
| 27 | Example 4 | PMG 9 (12) |

## Claims

1. A coating composition comprising pigment, medium and binder comprising a poly(C₃₋₁₈-hydrocarbyl mono guanidine) and **characterised in that** the weight ratio of pigment to binder in the composition is at least 2:1.

2. A composition according to claim 1 wherein the poly(C₃₋₁₈-hydrocarbyl monguanidine) comprises a plurality of groups of Formula (1) and/or groups of Formula (2) or salts thereof: 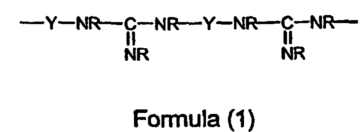 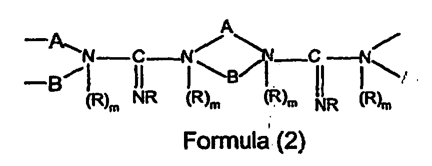 wherein:
each m independently is 0 or 1;
each Y independently is a C₂₋₁₈-hydrocarbyl group;
A and B are hydrocarbyl groups which together comprise a total of 3 to 18 carbon atoms;
each R independently is hydrogen, optionally substituted alkyl or optionally substituted alkoxy.

3. A composition according to either claim 1 or daim 2 wherein the weight ratio of pigment to binder in the composition is from 2:1 to 10:1.

4. A composition according to any one of the preceding claims wherein the binder comprises a poly(C₃₋₁₈-hydrocarbyl mono guanidine) and one or more further binders.

5. A composition according to any one of the preceding claims wherein the pigment is a porous pigment.

6. A composition according to any one of the preceding claims wherein the pigment comprises alumina or surface modified silica or a mixture thereof.

7. A composition according any one of the preceding claims wherein the binder comprises a poly(C₃₋₁₈-hydrocarbyl mono guanidine comprising a repeat unit of Formula (1) and polyvinylalcohol.

8. A composition according to any one of the preceding claims wherein the medium is a liquid medium.

9. A composition according to claims 8 wherein the liquid medium comprises water or a mixture of water and one or more water-soluble organic solvent(s).

10. A composition according to any one of the preceding claims the poly(C₃₋₁₈-hydrocarbyl mono guanidine) preferably comprises one or more groups of Formula (3) or salts thereof: 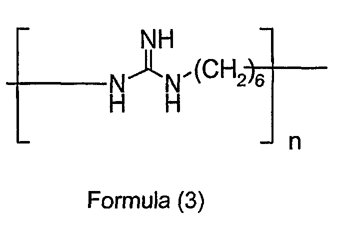 wherein:
n is 2 to 100

11. A coating composition according to any one of the preceding claims which comprises:
(a) 0.5 to 25 parts of a binder comprising 0.5 to 15 parts of a poly(C₃₋₁₈-hydrocarbyl mono guanidine) and 0 to 24.5 parts of a further binder,
(b) 7.5 to 50 parts of pigment; and
(c) 1 to 90 parts of a liquid medium comprising water or a mixture of water and organic solvent;
wherein all parts are by weight, the total number of parts (a) + (b) + (c) = 100 and the weight ratio of pigment to total binder in the composition is at least 2:1.

12. A recording material obtained from applying a composition as defined in any one of claims 1 to 11 to a substrate.

13. A recording material according to claim 12 wherein the substrate is plain paper, treated paper or a transparent plastic film.

14. A process for forming a recording material that comprises applying a composition as defined in any one of claims 1 to 11 to at least one surface of a substrate.

15. An ink-jet printing process that comprises applying an ink to a recording material defined in either claim 13 or 14 by means of an ink-jet printer.

## Patentansprüche

1. Beschichtungszusammensetzung, enthaltend Pigment, Medium und Bindemittel, enthaltend ein Poly(C₃₋₁₈-kohlenwasserstoffmonoguanidin), **dadurch gekennzeichnet, daß** Pigment und Bindemittel in einem Gewichtsverhältnis von mindestens 2:1 in der Zusammensetzung enthalten sind.

2. Zusammensetzung nach Anspruch 1, bei der das Poly(C₃₋₁₈-kohlenwasserstoffmonoguanidin) mehrere Gruppen der Formel (1) und/oder Gruppen der Formel (2) oder Salze davon: 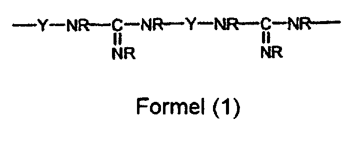 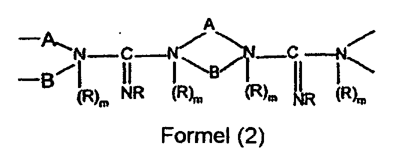 enthält, wobei:
m unabhängig voneinander jeweils 0 oder 1,
Y unabhängig voneinander jeweils einer C₂₋₁₈-Kohlenwasserstoffgruppe,
A und B Kohlenwasserstoffgruppen mit insgesamt 3 bis 18 Kohlenstoffatomen und
R unabhängig voneinander jeweils Wasserstoff, gegebenenfalls substituiertes Alkyl oder gegebenenfalls substituiertes Alkoxy bedeuten.

3. Zusammensetzung nach einem der Ansprüche 1 oder 2, bei der das Gewichtsverhältnis von Pigment zu Bindemittel bei 2:1 bis 10:1 liegt.

4. Zusammensetzung nach einem der vorhergehenden Ansprüche, bei der das Bindemittel wenigstens teilweise aus einem Poly(C₃₋₁₈-kohlenwasserstoffmonoguanidin) und mindestens einem weiteren Bindemittel besteht.

5. Zusammensetzung nach einem der vorhergehenden Ansprüche, bei der als Pigment ein poröses Pigment enthalten ist.

6. Zusammensetzung nach einem der vorhergehenden Ansprüche, bei der das Pigment wenigstens teilweise aus Aluminiumoxid oder oberflächenmodifiziertem Siliciumdioxid oder deren Mischung besteht.

7. Zusammensetzung nach einem der vorhergehenden Ansprüche, bei der das Bindemittel wenigstens teilweise aus einem Poly(C₃₋₁₈-kohlenwasserstoffmonoguanidin) mit einer Repetiereinheit der Formel (1) und Polyvinylalkohol besteht.

8. Zusammensetzung nach einem der vorhergehenden Ansprüche, bei der ein flüssiges Medium enthalten ist.

9. Zusammensetzung nach Anspruch 8, bei der das flüssige Medium wenigstens teilweise aus Wasser oder einer Mischung von Wasser und mindestens einem wasserlöslichen organischen Lösungsmittel besteht.

10. Zusammensetzung nach einem der vorhergehenden Ansprüche, bei der das Poly(C₃₋₁₈-kohlenwasserstoffmonoguanidin) bevorzugt eine oder mehrere Gruppen der Formel (3) oder deren Salze: 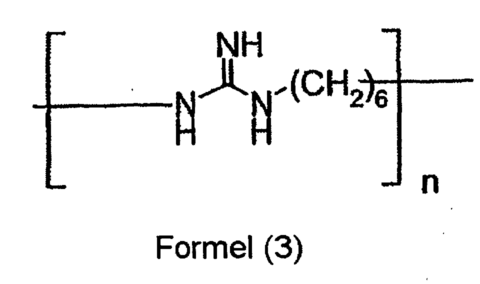 enthält, wobei n eine Zahl von 2 bis 100 bedeutet.

11. Beschichtungszusammensetzung nach einem der vorhergehenden Ansprüche, enthaltend:
(a) 0,5 bis 25 Teile eines Bindemittels, enthaltend 0,5 bis 15 Teile eines Poly(C₃₋₁₈-kohlenwasserstoffmonoguanidins) und 0 bis 24,5 Teile eines weiteren Bindemittels,
(b) 7,5 bis 50 Teile Pigment sowie
(c) 1 bis 90 Teile eines flüssigen Mediums, enthaltend Wasser oder eine Mischung von Wasser und organischem Lösungsmittel,
wobei es sich bei allen Teilen um Gewichtsteile handelt, die Gesamtzahl der Teile (a) + (b) + (c)=100 beträgt und Pigment und Gesamtbindemittel in einem Gewichtsverhältnis zueinander von mindestens 2:1 in der Zusammensetzung enthalten sind.

12. Aufzeichnungsmaterial, erhalten durch Aufbringen einer Zusammensetzung gemäß einem der Ansprüche 1 bis 11 auf ein Substrat.

13. Aufzeichnungsmaterial nach Anspruch 12, bei dem es sich bei dem Substrat um gegebenenfalls behandeltes Papier oder um eine durchsichtige Kunststoffolie handelt.

14. Verfahren zur Herstellung eines Aufzeichnungsmaterials, bei dem man auf ein Substrat mindestens einseitig eine Zusammensetzung gemäß einem der Ansprüche 1 bis 11 aufträgt.

15. Tintenstrahldruckverfahren, bei dem man eine Tinte mit einem Tintenstrahldrucker auf ein Aufzeichnungsmaterial gemäß einem der Ansprüche 12 oder 13 aufträgt.

## Revendications

1. Composition de revêtement comprenant un pigment, un milieu et un liant, comprenant une poly(hydrocarbyle en C₃₋₁₈ monoguanidine) et **caractérisée en ce que** le rapport pondéral du pigment au liant dans la composition est d'au moins 2:1.

2. Composition selon la revendication 1, dans laquelle la poly(hydrocarbyle en C₃₋₁₈ monoguanidine) comprend une pluralité de groupements de Formule (1) et/ou de groupements de Formule (2) ou de sels de ceux-ci : 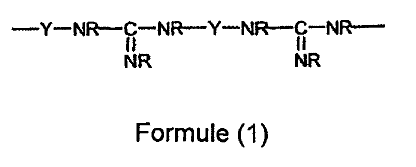 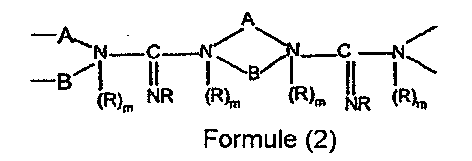 dans lesquelles
chaque m est indépendamment 0 ou 1 ;
chaque Y est indépendamment un groupement hydrocarbyle en C₂₋₁₈ ;
A et B sont des groupements hydrocarbyle qui comprennent ensemble un total de 3 à 18 atomes de carbone ;
chaque R est indépendamment hydrogène, alkyle éventuellement substitué ou alcoxy éventuellement substitué.

3. Composition selon l'une quelconque parmi la revendication 1 et la revendication 2, dans laquelle le rapport pondéral du pigment au liant dans la composition va de 2:1 à 10:1.

4. Composition selon l'une quelconque des revendications précédentes, dans laquelle le liant comprend une poly(hydrocarbyle en C₃₋₁₈ monoguanidine) et un ou plusieurs liants supplémentaires.

5. Composition selon l'une quelconque des revendications précédentes, dans laquelle le pigment est un pigment poreux.

6. Composition selon l'une quelconque des revendications précédentes, dans laquelle le pigment comprend de l'alumine ou de la silice à surface modifiée, ou un mélange de celles-ci.

7. Composition selon l'une quelconque des revendications précédentes, dans laquelle le liant comprend une poly(hydrocarbyle en C₃₋₁₈ monoguanidine) comprenant un motif répétitif de Formule (1) et de l'alcool polyvinylique.

8. Composition selon l'une quelconque des revendications précédentes, dans laquelle le milieu est un milieu liquide.

9. Composition selon la revendication 8, dans laquelle le milieu liquide comprend de l'eau ou un mélange d'eau et d'un ou plusieurs solvants organiques hydrosolubles.

10. Composition selon l'une quelconque des revendications précédentes, dans laquelle la poly(hydrocarbyle en C₃₋₁₈ monoguanidine) comprend de préférence un ou plusieurs groupements de Formule (3) ou de sels de ceux-ci : 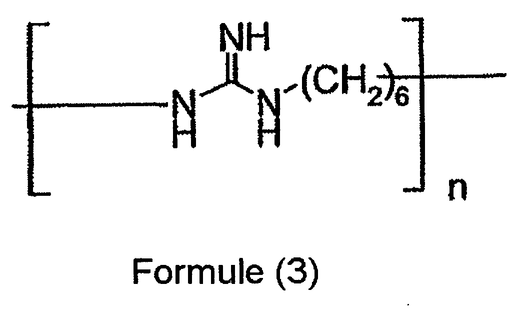 dans laquelle :
n va de 2 à 100.

11. Composition de revêtement selon l'une quelconque des revendications précédentes, comprenant ;
(a) de 0,5 à 25 parties d'un liant comprenant de 0,5 à 15 parties d'une poly(hydrocarbyle en C₃₋₁₈ monoguanidine) et de 0 à 24,5 parties d'un liant supplémentaire ;
(b) de 7,5 à 50 parties de pigment ; et
(c) de 1 à 90 parties d'un milieu liquide comprenant de l'eau ou un mélange d'eau et de solvant organique ;
dans laquelle toutes les parties sont en poids, le nombre total de parties (a) + (b) + (c) = 100 et le rapport pondéral du pigment au liant total dans la composition est d'au moins 2:1.

12. Matériau d'enregistrement obtenu par l'application d'une composition, telle que définie selon l'une quelconque des revendications 1 à 11, à un substrat.

13. Matériau d'enregistrement selon la revendication 12, dans laquelle le substrat est du papier ordinaire, du papier traité ou un film plastique transparent.

14. Procédé de formation d'un matériau d'enregistrement, comprenant l'application d'une composition telle que définie selon l'une quelconque des revendications 1 à 11 à au moins une surface d'un substrat.

15. Procédé d'impression à jet d'encre, comprenant l'application d'une encre à un matériau d'enregistrement défini selon l'une quelconque parmi les revendications 12 et 13, au moyen d'une imprimante à jet d'encre.
